Europäisches Patentamt

**European Patent Office**

Office européen des brevets

(11) Publication number: **0 331 792 B1**

# EUROPEAN PATENT SPECIFICATION

(45) Date of publication of patent specification: **11.12.91**  (51) Int. Cl.⁵: **B65D  5/06,** B65B 51/24

(21) Application number: **88116133.5**

(22) Date of filing: **29.09.88**

(54) **Easy opening gable top carton and sealing die for its manufacture.**

---

(30) Priority: **11.03.88 CA 561264**

(43) Date of publication of application:
**13.09.89 Bulletin  89/37**

(45) Publication of the grant of the patent:
**11.12.91 Bulletin  91/50**

(84) Designated Contracting States:
**AT BE CH DE ES FR GB GR IT LI LU NL SE**

(56) References cited:
**EP-A- 0 222 511**
**WO-A-82/04025**
**US-A- 3 071 305**
**US-A- 3 334 799**
**US-A- 4 712 727**

(73) Proprietor: **FBI BRANDS LTD.**
**16 Chemin Benoit**
**Mt. St.Hilaire Quebec J3G 4S6(CA)**

(72) Inventor: **Poole, Donald A.**
**560 Blackwood Drive**
**Greenfield Park Quebec(CA)**

(74) Representative: **Patentanwälte Deufel, Hertel,**
**Lewald**
**Isartorplatz 6 Postfach 26 02 47**
**W-8000 München 26(DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a gable top carton, the gable closure of which includes opposed side panels with side flaps extending therefrom and opposed end panels with end flaps extending therefrom to a lower height than the flaps of the side panels, said side panels and end panels having score lines to facilitate closing and opening, the opposed side flaps being adhered together and the end flaps being inwardly folded and adhered to the lower portion of the side flaps, the inner surface of the carton being coated with thermoplastic material and the sealing up of the carton being accomplished by heat sealing to leave an unsealed or lightly sealed area at the centre of the upper portion of an end flap to facilitate opening of the carton by a consumer.

The invention also refers to a die for sealing a heat sealable gable top carton of the kind mentioned above.

Such gable top cartons are known from US-A-4 712 727 (Wyberg) and WO-A-82/04025 (Mardon).

Gable top cartons are commonly used for packaging liquid food products such as milk, juices, citrus products and vegetable cocktails. When the product is to be refrigerated, such as in the case of milk, the integrity of the seal is not critical. It is desirable to avoid spillage, but because of the short shelf life and refrigeration of the milk there should not be a practical problem due to spoilage as a result of contaminants entering the carton. It is therefore possible to provide a closure that can be opened without too much difficulty by the consumer.

Where the product to be packaged is another product such as orange juice or vegetable juice, it is desirable that it have adequate shelf life without the necessity of refrigeration. If the seal is inadequate, bacteria, molds and yeast may contaminate the product and cause spoilage. Also if air enters the container it may cause oxidation. It is therefore necessary to provide an extremely strong seal. The entire top is heat sealed, according to present practice and is also impressed with vertical stake lines, a horizontal stake line, and a central stake point. The result is, however, that the container is not an easy opening carton from the point of view of the average consumer. This defeats one of the main purposes of having a gable top container. Various expedients have been used to try to solve this problem including a weakened severance line, but this has not proven to be entirely satisfactory.

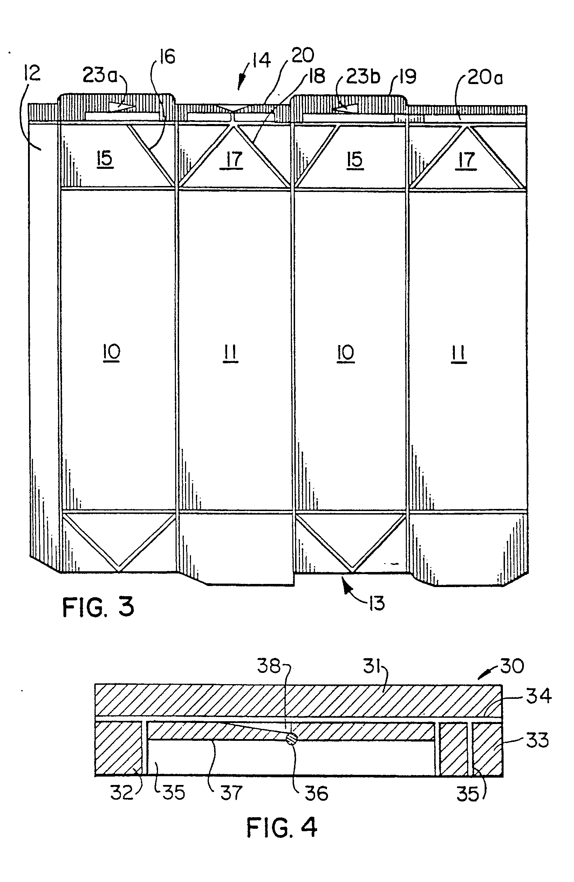

An approach has been made by Wyberg disclosing a fillet configuration including a notch to facilitate opening. Mardon shows a hatched portion in Fig. 3 with a less efficient seal than the other parts of the top seal.

It is an object of the present invention to provide a gable top carton having the characteristic of being easy opening and yet which would withstand the pressures generated during this process (for instance a particular pasteurisation treatment after cold filling and closing a gable top container to avoid internal vacuum).

A gable top carton of the kind mentioned achieving that object is characterized in that there is a stake point impressed in the side flaps which presses together, expands into abutment and seals the adjacent inwardly folded end flaps.

Thus a gable top carton is provided, the gable closure of which includes opposed side panels with side flaps extending therefrom and opposed end panels with end flaps extending therefrom to a lower height than the flaps of the side panels, said side panels and end panels having score lines to facilitate closing and opening, the opposed side flaps being adhered to each other and the end flaps being adhered to the lower portions of the side flaps. An unsealed area is left at the center of the upper portion of an end flap to facilitate opening of the carton by a consumer.

The feature of a stake point is not found in any known easy opening container, yet it enables the easy opening container to withstand the pressures developed during the above mentioned process. The horizontal stakeline is deeply embossed by a rib and is strongly indented to give a more secure seal.

Advantageous embodiments of the invention are cited in subclaims 2 to 8.

Preferably the die for sealing such a heat sealable gabe top carton of the invention is characterized in that said die includes a pair of jaws, having upper surfaces for pressing together into adhering relationship the portions of the side flaps that are above the end flaps, said jaws having lower surfaces for pressing together the side flaps and folded end flaps, a recessed area in said lower surfaces to provide an area that is not firmly adhered at the centre of the upper portion of said end flaps to facilitate opening of the carton and one of said dies having a protrusion immediately below said recessed area to provide a stake point which presses together, expands into abutment and seals said adjacent edges of the inwardly folded end flaps.

Advantageous embodiments of the die are cited in claims 10 to 12.

Exemplary embodiments of the invention are illustrated in the drawings in which

Figure 1 is a perspective view of a gable top container in accordance with this invention;

Figure 2 is a perspective view illustrating the opening of the carton shown in Figure 1, with part broken away.

2

Figure 3 illustrates the carton of Figure 1 that has been opened up to show the areas that have been heat sealed.

Figure 4 is an elevation view of a die that may be used for heat sealing the carton of Figures 1 to 3.

Figure 5 is a perspective view of a gable top container in accordance with another embodiment of this invention illustrating the opening of the carton.

Figure 6 is a perspective side elevation view of the male portion of a die for producing the embodiment of Figure 5.

Figure 7 is a perspective side elevation view of the female portion of a die for producing the embodiment of Figure 5.

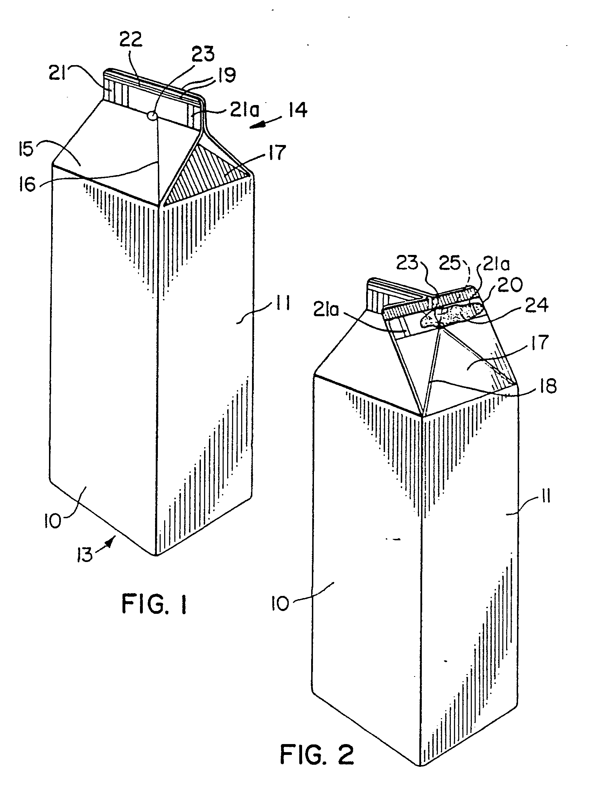

Referring now to the drawings, the carton illustrated is mainly of convention construction. It includes opposed pairs of side walls 10 and end walls 11, connected by a fifth panel 12 (shown in Figure 3). There is a bottom closure generally indicated at 13 and a gable top generally indicated at 14. The gable top includes a pair of side panels 15 having score lines 16 to facilitate opening one end and a pair of end panels 17 having score lines 18. A pair of top flaps 19 are extension of side panels 15 and extend somewhat higher than flaps 20 that are an extension of end panels 17. Flaps 19 are heat sealed in face to face relationship as shown in Figure 1. Flaps 20 and 20a are heat sealed to the interior of the lower parts of flaps 19 as shown in Figure 2. It is usual to provide a pair of stake lines 21 at the end of flaps 19 that is not to be opened and which coincides with the fifth panel 12. At the other end of flap 19 that is to be opened there is stake line 21a. There is also a horizontal stake line 22 extending the full length of the side flaps 19 and being located at the top of the end flaps 20 that have been folded within the side flaps. The stake lines are strongly indented to give a more secure seal. There is also a stake point 23 which presses together, expands into abutment and seals the adjacent edges of the inwardly folded end flaps 20 and 20a. The foregoing is conventional structure.

The difference from conventional structure according to this invention is in the area of the seal between flap 19 and flap 20, at the end of the closure that is to be opened. According to conventional practice, in the case of hot fill, the whole of the interior of flap 20 is sealed to flaps 19. According to this invention an area which may be in the shape of an inverted triangle is left unsealed at the top centre of flap 20 as indicated by the numeral 25 in the broken away part of Figure 2. The remaining sealed area is stippled and indicated at 24. In Figure 3 the unsealed area is shown at 23a and 23b which combine to provide area 23 when the carton is closed. It has been found that when there is the location of stake point 23 at the apex of triangle 25, an effective seal is provided in spite of this unsealed area. The unsealed area at the top centre enables the consumer to start opening the carton and also results in there being less seal to pull apart where the consumer has the least leverage.

Figure 4 illustrates the male jaw of a suitable die 30 including die face portion 31 for pressing together the upper part of flaps 19, die face portions 32 and 33 for the ends and horizontal stake embossing line 34, vertical stake embossing lines 35 and embossing protrusion 36 for the stake point. Die face portion 37, which presses flaps 19 and 20 together to connect them, is cut away at 38 to leave a triangular unsealed area. Die 30 can be used with a matching female die.

Alternatives for providing the desired unsealed area would include the use of silicone as a parting agent to prevent adhesion in area 25. Another possibility, if adhesive were used in place of heat sealing, would be to omit adhesive in area 25. Heat sealing is however the preferred method of closure where the carton is coated with a thermoplastic resin. The preferred structural material is in five layers, namely, an inner coating of polyethylene, an aluminum foil barrier, a layer of polyethylene to bond the foil, a layer of paper board and an outer layer of polyethylene. Other thermoplastic coatings could be used of the type acceptable with food products, such as vinyl resins, e.g., polyvinyl chloride.

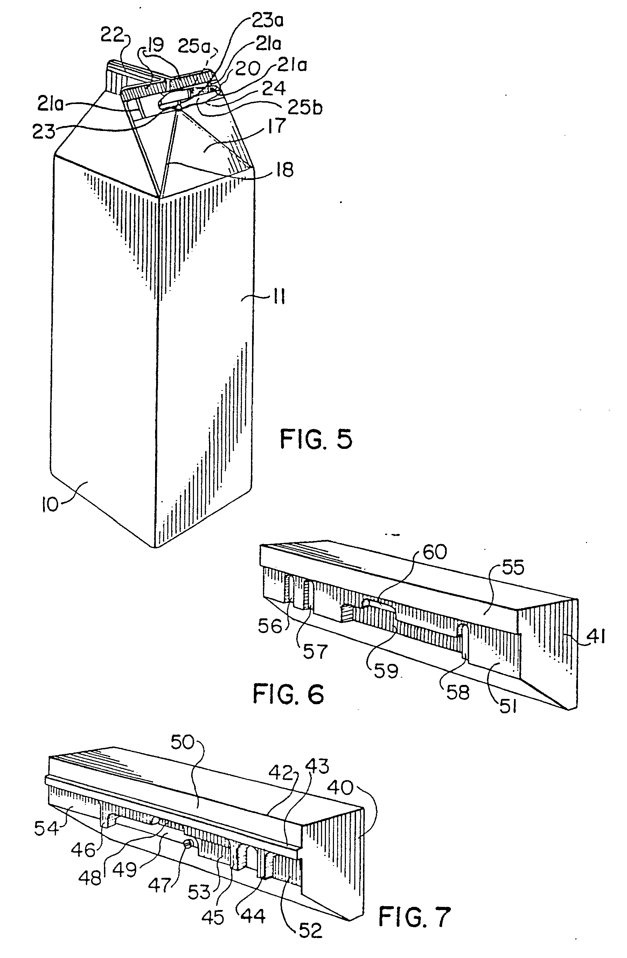

Figure 5 of the drawings illustrates an improved structure which is similar to that illustrated in Figures 1 to 4 but showing an unsealed or lightly sealed area at the top of flap 20 immediately above stake point 23 substantially in the shape of a rectangle 25a instead of the triangle of Figure 2 and showing a further unsealed or lightly sealed area 25b extending between the central area 23a where stake point 23 is located and stake line 21a. Area 21b will therefore extend between stake lines 21a at each side of end flap 17 when the flaps 19 are separated to open the closure as shown in Figure 5. Areas 25a and 25b are left unsealed or are lightly sealed by providing a die which applies no pressure or little pressure in these areas.

The construction of a suitable die is illustrated in Figure 6 showing female jaw 41 and Figure 7 showing male jaw 40. Referring now to Figure 7, male jaw 40 has a die face 42 having a raised longitudinal rib 43 to provide a horizontal stake line and vertical ribs 44 and 45 to provide stake lines on the side of the container that is to remain sealed and a vertical rib 46 to provide a stake line on the side of the container that is to be opened. Male jaw 40 has a set screw 47 to provide a central stake point 23. The generally rectangular relieved area 25a of Figure 5 is provided dy depressed area 48 immediately above set screw 47 and offset in the direction of the side of the carton that is to be opened. A relieved area 49 is also provided extending from set screw 47, which provides stake point 23, to web 46 which provides take line 21a. Male jaw 40 also includes area 50 for sealing top flaps 19 of the container and areas 52, 53 and 54 for sealing the remaining areas of flaps 19 and 20.

Female die 41 shown in Figure 6 has an upper area 55 which mates with portion 50 of the male jaw and a slightly undercut area 51, the upper edge of which is located to accommodate rib 43. Die 41 has slots 56 and 57 to accommodate webs 44 and 45 and slot 58 to accommodate web 46. It also has a depressed area 59, to relieve pressure, matching area 49 of the male die and generally rectangular pressure relieving area 60 matching area 48 of the male die.

## Claims

1. A gable top carton, the gable closure (14) of which includes opposed side panels (15) with side flaps (19) extending therefrom and opposed end panels (17) with end flaps (20) extending therefrom to a lower height than the flaps (19) of the side panels, said side panels (15) and end panels (17) having score lines (16, 18) to facilitate closing and opening, the opposed side flaps (19) being adhered together and the end flaps (20) being inwardly folded and adhered to the lower portion of the side flaps (19), the inner surface of the carton being coated with thermoplastic material and the sealing up of the carton being accomplished by heat sealing to leave an unsealed or lightly sealed area (25, 25a) at the centre of the upper portion of an end flap (20) to facilitate opening of the carton by a consumer characterized in that there is a stake point (23) impressed in the side flaps (19) which presses together, expands into abutment and seals the adjacent inwardly folded end flaps (20).

2. A gable top carton as in claim 1, in which the stake point (23) is immediately below the unsealed or lightly sealed area (25, 25a).

3. A gable top carton as in claims 1 or 2, having a horizontal stake line (22) impressed in the side flaps (19) in register with the tops of the inwardly folded end flaps.

4. A gable top carton as in claims 1, 2 or 3, in which there are vertical stake lines (21, 21a) at each end of the side flaps (19).

5. A gable top carton as in claim 4, in which there is a further unsealed or lightly sealed area (25b) extending along the lower portion of the end flap (19) from substantially the centre to the closed vertical stake lines (21a).

6. A gable top container as in any of claims 1 to 5, containing a shelf stable non-carbonated liquid food product, preferably citrus juice, free from preservatives, and which does not require an artificially cooled storage environment and which container is free from significant internal vacuum.

7. A gable top container as in claim 6, the contents of which remains shelf stable for at least three months.

8. A gable top container as in claim 7, the contents of which is a citrus juice having an improved taste as compared with the product of a hot fill method.

9. A die for sealing a heat sealable gable top carton as claimed in claim 1, characterized in that said die includes a pair of jaws (40, 41), having upper surfaces (50, 55) for pressing together into adhering relationship the portions of the side flaps (19) that are above the end flaps (20), said jaws having lower surfaces (51, 52, 53, 54) for pressing together the side flaps (19) and folded end flaps (20), a recessed area (48, 60) in said lower surfaces to provide an area that is not firmly adhered at the centre of the upper portion of said end flaps to facilitate opening of the carton and one of said dies having a protrusion (47) immediately below said recessed area (48, 60) to provide a stake point (23) which presses together, expands into abutment and seals said adjacent edges of the inwardly folded end flaps (20).

10. A die as in claim 9, in which a linear horizontal rib (43) is provided in one of said jaws at the junction between the upper surfaces and the lower surfaces, acting in cooperation with the other of said jaws to provide a horizontal stake line (22) at the upper edges of the end flaps (20).

11. A die as in claim 10 comprising vertical ribs (44, 45, 46) on one of said jaws to give vertical stake lines (21, 21a) adjacent to each end of the side flaps (19).

12. A die as in claim 11 in which there is an additional recessed area below (49, 59) said recess (48, 60) and extending between one of said vertical ribs (46) and the centre of the die.

## Revendications

1. Boîte en forme de pignon, dont l'élément de fermeture (14) comprend des panneaux latéraux opposés (15), à partir desquels s'étendent des rabats latéraux (19), et des panneaux d'extrémité opposés (17), à partir desquels des rabats d'extrémité (20) s'étendent jusqu'à une hauteur inférieure à celle des rabats (19) des panneaux latéraux, les panneaux latéraux (15) et les panneaux d'extrémité (17) comportant des lignes rainurées (16,18) facilitant l'ouverture et la fermeture, les rabats latéraux opposés (19) étant fixés par adhésif l'un à l'autre, et les rabats d'extrémité (20) étant repliés vers l'intérieur et fixés par adhésif à la partie inférieure des rabats latéraux (19), la surface intérieure de la boîte étant recouverte par un matériau thermoplastique et le scellement étanche de la boîte étant obtenu au moyen d'un scellement à chaud laissant subsister une zone non scellée ou faiblement scellée (25,25a) au centre de la partie supérieure d'un rabat d'extrémité (20) pour faciliter l'ouverture de la boîte par un consommateur, caractérisée en ce qu'un point de blocage (23) est imprimé dans les rabats latéraux (19), repousse ces derniers les uns contre les autres, étend en aboutement et étanchéifie les rabats d'extrémité adjacents (20) repliés vers l'intérieur.

2. Boîte en forme de pignon selon la revendication 1, dans lequel le point de blocage (23) est situé directement au-dessous de la zone non scellée ou légèrement scellé (25,25a).

3. Boîte en forme de pignon selon la revendication 1 ou 2, comportant une ligne horizontale de blocage (22) imprimée dans les rabats latéraux (19), dans une position alignée avec les parties supérieures des rabats d'extrémité repliés vers l'intérieur.

4. Boîte en forme de pignon selon les revendications 1, 2 ou 3, dans laquelle il est prévu des lignes verticales de blocage (21,21a) au niveau de chaque extrémité des rabats latéraux (19).

5. Boîte en forme de pignon selon la revendication 4, dans lequel il est prévu une autre zone non scellée ou faiblement scellée (25b) qui s'étend le long de la partie inférieure du rabat d'extrémité (19), sensiblement depuis le centre jusqu'aux lignes verticales fermées de blocage (21a).

6. Récipient en forme de pignon selon l'une quelconque des revendications 1 à 5, contenant une nourriture liquide non gazéifiée apte à se conserver, de préférence du jus de citron, ne comportant aucun agent préservatif, et qui ne requiert pas un environnement de stockage refroidi artificiellement, ce récipient ne présentant aucun vide interne important.

7. Récipient en forme de pignon selon la revendication 6, dont le contenu reste apte à se conserver pendant au moins trois mois.

8. Récipient en forme de pignon selon la revendication 7, dont le contenu est du jus de citron possédant un coût rehaussé par rapport au produit obtenu au moyen d'un procédé de remplissage à chaud.

9. Matrice pour sceller un boîtier en forme de pignon, pouvant être scellé à chaud, selon la revendication 1, caractérisée en ce que ladite matrice comprend un couple de mâchoires (40,41) possédant des surfaces supérieures (50,55) destinées à repousser l'une contre l'autre, de manière qu'elles adhèrent entre elles, les parties des rabats latéraux (19), qui sont situées au-dessus des rabats d'extrémité (20), lesdites mâchoires possédant des surfaces inférieures (51,52,53,54) servant à repousser l'un contre l'autre les rabats latéraux (19) et les rabats d'extrémité repliés (20), une zone en renfoncement (48,61) ménagée dans lesdites surfaces inférieures pour fournir une zone qui n'adhère pas fermement au centre de la partie supérieure desdits rabats d'extrémité de manière à faciliter l'ouverture de la boîte, tandis que l'une desdites mâchoires possède une partie saillante (47) située directement au-dessous de ladite zone en renfoncement (48,60) de manière à former un point de blocage (23) qui repousse l'un contre l'autre, étend en aboutement et scelle lesdits bords adjacents des rabats d'extrémité (20) repliés vers l'intérieur.

10. Matrice selon la revendication 9, dans laquelle une nervure linéaire horizontale (43) est prévue dans l'une desdites mâchoires au niveau de la jonction entre les surfaces supérieures et les surfaces inférieures, cette mâchoire agissant en coopération avec l'autre desdites mâchoires de manière à former une ligne horizontale de blocage (22) au niveau des bords supérieurs des rabats d'extrémité (20).

11. Matrice selon la revendication 10 comportant des nervures verticales (44,45,46) situées sur l'une desdites mâchoires de manière à former des lignes verticales de blocage (21,21a) adjacentes à chaque extrémité des rabats latéraux (19).

12. Matrice selon la revendication 11, dans laquelle il est prévu une zone supplémentaire en renfoncement située au-dessous (49,59) dudit renfoncement (48,60) et s'étendant entre l'une desdites nervures verticales (46) et le centre de la matrice.

**Patentansprüche**

1. Behälter mit giebelförmigem Oberteil, dessen Giebelverschluß (14) einander gegenüberstehende Seitenfelder (15) mit seitlichen Klappenteilen (19), die hiervon abstehen und gegenüberstehende stirnseitige Feldern (17) mit stirnseitigen Klappenteilen (20) umfaßt, die hiervon bis zu einer niedrigeren Höhe als die Klappenteile (19) der seitlichen Felder abstehen, wobei diese seitlichen Felder (15) und stirnseitigen Felder (17) über Schwächungslinien (16, 18) verfügen, um Öffnen und Schließen zu erleichtern, wobei die sich gegenüberstehenden Seitenklappenteile (19) aneinander haften und die endseitigen Klappenteile (20) nach innen gefaltet sind und an dem unteren Teil der seitlichen Klappenteile (19) haften, wobei die Innenfläche des Behälters mit thermoplastischem Material überzogen ist und das Versiegeln des Behälters durch Heißsiegeln herbeigeführt wird, um einen nicht versiegelten oder gering versiegelten Bereich (25, 25a) an der Mitte des oberen Teils einer stirnseitigen Klappe (20) zu lassen, und das Öffnen des Behälters durch einen Konsumenten zu erleichtern, dadurch gekennzeichnet, daß in die seitlichen Klappenteile (19) ein sogenannter Körn- und Befestigungspunkt (23) eingepreßt ist, der die benachbarten nach innen gefalteten stirnseitigen Klappenteile (20) zusammenpreßt, den Anschlag weitet und versiegelt.

2. Behälter mit giebelförmigem Oberteil nach Anspruch 1, bei dem der Körn- und Befestigungspunkt (23) unmittelbar unterhalb des nicht versiegelten oder gering versiegelten Bereichs (25, 25a) sich befindet.

3. Behälter mit giebelförmigem Oberteil nach den Ansprüchen 1 oder 2 mit einer horizontalen Körn- und Befestigungslinie (22), die in die Seitenklappenteile (19) in Ausrichtung mit den Oberteilen der nach innen gefalteten stirnseitigen Klappenteile eingedrückt ist.

4. Behälter mit giebelförmigem Oberteil nach den Ansprüchen 1, 2 oder 3, bei dem vertikale Körn- und Befestigungslinien (21, 21a) an jedem Ende der seitenförmigen Klappenteile (19) vorgesehen sind.

5. Behälter mit giebelförmigem Oberteil nach Anspruch 4, bei dem ein weiterer nicht versiegelter oder gering versiegelter Bereich (25b) sich längs des unteren Teils des stirnseitigen Klappenteils (19) im wesentlichen von der Mitte bis zu den geschlossenen vertikalen Körn- und Befestigungslinien (21a) sich erstreckt.

6. Behälter mit giebelförmigem Oberteil nach einem der Ansprüche 1 bis 5, der ein lagerungsstabiles nicht mit Kohlendioxid gesättigtes flüssiges Nahrungsmittelprodukt, vorzugsweise Zitrussaft, enthält, der frei von Haltbarmachern ist und der keine künstlich gekühlte Lagerumgebung fordert und wobei der Behälter frei von irgendeinem beachtlichen Innenvakuum ist.

7. Behälter mit giebelförmigem Oberteil nach Anspruch 6, dessen Inhalt lagerungsstabil für wenigstens drei Monate verbleibt.

8. Behälter mit giebelförmigem Oberteil nach Anspruch 7, dessen Inhalt ein Zitronensaft mit verbessertem Geschmack verglichen mit dem Produkt einer Heißfüllmethode ist.

9. Werkzeug für das Siegeln eines Behälters mit einem giebelförmigen heiß siegelbaren Oberteil nach Anspruch 1, dadurch gekennzeichnet, daß dieses Werkzeug ein Paar von Backen (40, 41) mit Oberseiten (50, 55) umfaßt, um die Teile der Seitenklappenteile (19) in haftende Beziehung zusammenzupreßen, die sich oberhalb der stirnseitigen Klappenteile (20) befinden, wobei diese Backen untere Flächen (51, 52, 53, 54) haben, um die Seitenklappenteile (19) und die gefalteten stirnseitigen Klappenteile (20) zusammenzudrücken, einen mit Ausnehmungen versehenen Bereich (48, 60) in diesen unteren Flächen umfaßt, um einen Bereich zu schaffen, der nicht fest in der Mitte des oberen Teils dieser stirnseitigen Klappenteile haftet, um das Öffnen des Behälters zu erleichtern und wobei eines dieser Werkzeuge einen Vorsprung (47) unmittelbar unterhalb dieses mit Ausnehmungen versehenen Bereichs (48, 60) hat, um einen Körn- und Befestigungspunkt (23) zu bilden, der die benachbarten Kanten der nach innen gefalteten stirnseitigen Klappenteile (20) zusammenpreßt und in Anlage weitet und diese versiegelt.

**10.** Werkzeug nach Anspruch 9, bei dem eine lineare horizontale Rippe (43) in einer dieser Backen am Übergang zwischen den oberen Flächen und den unteren Flächen vorgesehen ist, die mit der anderen dieser Backen zusammenwirkt, um eine horizontale Körn- und Befestigungslinie (22) an den oberen Kanten dieser stirnseitigen Klappen (20) zu bilden.

**11.** Werkzeug nach Anspruch 10 mit vertikalen Rippen (44, 45, 46) auf einer dieser Backen, um vertikale Körn- und Befestigungslinien (21, 21a) benachbart jedem Ende dieser Seitenklappenteile (19) zu verleihen.

**12.** Werkzeug nach Anspruch 11, bei dem ein zusätzlicher mit Ausnehmungen versehener Bereich unterhalb (49, 59) dieser Ausnehmung (48, 60) vorgesehen ist und sich zwischen eine dieser vertikalen Rippen (46) und die Mitte des Werkzeugs erstreckt.

FIG. 1

FIG. 2

FIG. 3

FIG. 4

FIG. 5

FIG. 6

FIG. 7